# EUROPEAN PATENT SPECIFICATION

(11) **EP 3 705 374 B1**
(45) Date of publication and mention of the grant of the patent: **25.06.2025**
(21) Application number: 18874292.8
(22) Date of filing: 25.01.2018
(51) Int. Cl.: B66F 9/06, B62D 1/02, B62D 65/02

(54) **CONVEYOR**
FÖRDERER
TRANSPORTEUR

(30) Priority: 30.10.2017 CN 201711035571
(43) Date of publication of application: 09.09.2020
(73) Proprietor: NIO (Anhui) Holding Co., Ltd., Hefei City, Anhui Province (CN)
(72) Inventor: HAO, Zhanduo, Anting, Jiading, Shanghai (CN); CHEN, Jiong, Anting, Jiading, Shanghai (CN)
(74) Representative: Vossius & Partner Patentanwälte Rechtsanwälte mbB
(86) International application number: PCT/CN2018/074165
(87) International publication number: WO 2019/085293

(56) References cited:
- CN-A- 104 120 899
- CN-A- 105 858 034
- CN-A- 105 858 056
- CN-A- 107 207 049
- CN-U- 202 089 587
- CN-U- 204 904 092
- DE-A1- 102010 050 907
- JP-A- 2017 081 376
- KR-A- 20170 008 075

## Description

### Technical Field

**The** invention relates to the field of battery loading and unloading, and more particularly to a battery swap conveyor for replacement of batteries for electric vehicles.

### Background Art

With the supply pressure and exhaust pollution brought about by the consumption of conventional fossil energy, the development of conventional oil-fueled vehicles has entered a sluggish period. In view of this, energy-saving and environment-friendly electric vehicles have been developed very fast in recent years due to the favorable prospect of green energy. At present, in the development process of electric vehicles, due to the limitation of current battery technologies, insufficient battery capacity and long charging time are inevitable problems at this stage. In order to solve such technical problems, in one aspect, the research and development investment in the battery technology itself has increased; and in a further aspect, the development of peripheral technologies for batteries has also increased. For example, battery replacement is an extremely fast, convenient and safe method.

Specifically, battery swapping (i.e., battery replacement) refers to an energy supplement method in which a traction battery of an electric vehicle is detached by a battery swap device and replaced with another set of traction battery. A battery swap station is a place to achieve battery swap of traction batteries of electric vehicles, and has functions of charging, thermal management, communication, monitoring, etc. A certain number of battery boxes can be loaded in advance in the battery swap station, and a dedicated charging cable is used in a battery compartment for quick connection and charging with a charging device.

In the process of a battery swap, it is inevitable to use a battery transfer device to take the battery out of the battery compartment and transport it to a position where the battery swap can be performed for an electric vehicle. In the actual application process, it is found that such a vehicle for battery detachment and swap generally needs to have an omni-directional transport function in addition to carrying a battery swap device for loading and unloading of batteries. The term "omni-directional" mentioned herein mainly refers to X and Y directions, i.e., the direction which is the same as the traveling direction of the vehicle for battery detachment and swap and the direction perpendicular to the traveling direction.

There are many ways to realize omni-directional movements, for example, using a lifting and unidirectional transport mechanism to realize the decoupling of movements in the X and Y directions; in another example, using a roller and a forklift with a movement direction perpendicular to that of the roller; and in a further example, using a roller moving in a single direction and a chassis that can move in all directions. However, these battery swap conveyors using motion decoupling will increase the complexity of the mechanism. How to simplify the structural design as much as possible while achieving omni-directional transport and battery swap functions has become an urgent technical problem to be solved.

CN 105 858 056 A discloses an AGV comprising the features of the preamble of claim 1.

### Summary of the Invention

An objective of the invention is to provide a conveyor having an omni-directional transport function.

Another objective of the invention is to provide a conveyor having an omni-directional transport function for replacing batteries. The objects of the present invention are achieved by the features of independent claim 1. Further preferred embodiments of the present invention are defined in the dependent claims.

In particular, in order to achieve the objectives of the invention, according to one aspect of the invention, a conveyor is also provided, characterized by comprising: a bearing portion for bearing a component to be conveyed; an omni-directional transport assembly comprising a plurality of transport mechanisms arranged on the bearing portion, wherein the transport mechanisms are used for providing driving forces in set directions, respectively, and the component to be conveyed moves in the direction of a resultant force of the driving forces of the plurality of transport mechanisms relative to the bearing portion; and a controller for controlling the starting and stopping and/or forward and reverse rotation of the plurality of transport mechanisms so as to drive the component to be conveyed in a set direction of the resultant force.

Optionally, the transport mechanisms are Mecanum wheels.

Optionally, the Mecanum wheels are arranged close to edges of the bearing portion, respectively.

Optionally, the bearing portion is constructed into a rectangular shape, and the omni-directional transport assembly comprises at least two Mecanum wheels; wherein the two Mecanum wheels are arranged longitudinally or transversely close to the edges of the bearing portion, respectively.

Optionally, the bearing portion is constructed into a rectangular shape, and the omni-directional transport assembly comprises at least four Mecanum wheels; wherein the Mecanum wheels are arranged close to four corners of the bearing portion, respectively.

The omni-directional transport assembly further comprises a plurality of universal wheels which are arranged close to the center and the edges of the bearing portion, respectively.

Optionally, the universal wheels arranged close to the edges of the bearing portion are each positioned between two adjacent Mecanum wheels.

Optionally, the conveyor further comprises edge stoppers arranged along the edges of the bearing portion, the edge stoppers each having a stop position in which the edge stopper is configured to prevent the component to be conveyed from passing therethrough and a passage position in which the edge stopper is configured to allow the component to be conveyed to pass therethrough.

Optionally, the edge stoppers are pivoted with the edges of the bearing portion; when in the stop position, the edge stopper is pivoted to be higher than the bearing portion; and when in the passage position, the edge stopper is pivoted to be lower than the bearing portion.

The conveyor further comprises: a moving portion for driving the bearing portion to move.

Optionally, the direction of the resultant force is along a longitudinal or transverse direction of the bearing portion of the conveyor.

Optionally, the transport mechanism is an omni-directional steering wheel.

In order to achieve the objectives of the invention, according to another aspect of the invention, another conveyor is also provided, and the conveyor is used for transporting batteries to be replaced of electric vehicles.

Optionally, the bearing portion has a size matching the size of the batteries to be replaced.

Being provided with the omni-directional transport assembly and equipped with a corresponding control system, the conveyor according to the invention realizes omni-directional transport of a component to be replaced with a relatively simple mechanical structure.

### Brief Description of the Drawings

Fig. 1 is a top view of an embodiment of a conveyor according to the invention.
Fig. 2 is a side view of the conveyor in Fig. 1.
Fig. 3 is a front view of the conveyor in Fig. 1.
Fig. 4 is a top view of another embodiment of a conveyor according to the invention.
Fig. 5 is a schematic diagram showing a limiting stopper in a stop position in the conveyor.
Fig. 6 is a schematic diagram showing the limiting stopper in a passage position in the conveyor.
Fig. 7 is a schematic diagram of transport of the conveyor according to the invention in the positive direction of a longitudinal direction.
Fig. 8 is a schematic diagram of transport of the conveyor according to the invention in the positive direction of a transverse direction.

### Detailed Description of Embodiments

According to the conception of the invention, an embodiment of a conveyor is provided herein with reference to the accompanying drawings. For convenience of description, X, Y and Z are referenced in several accompanying drawings as a spatial coordinate system, wherein X indicates the transverse direction of the conveyor, Y indicates the longitudinal direction of the conveyor, and Z indicates the vertical direction of the conveyor.

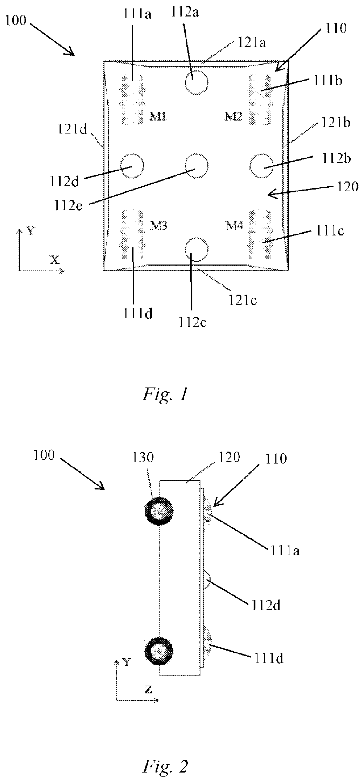

Referring to Figs. 1-3, a conveyor 100 is shown. The conveyor 100 comprises a bearing portion 120 as a load bearing body, which is used for bearing a component to be conveyed during transportation. Most importantly, the conveyor 100 further comprises an omni-directional transport assembly 110. The omni-directional transport assembly 110 comprises a plurality of transport mechanisms of various forms arranged on the bearing portion 120, wherein these transport mechanisms are used for providing driving forces in set directions, respectively, and causing the component to be conveyed to move in the direction of a resultant force of the driving forces of the plurality of transport mechanisms. In order to realize the aforementioned functions, the transport mechanism can have various implementation forms. For example, these transport mechanisms can be arranged at different positions on the bearing portion and force application directions thereof can be set. In addition, the conveyor 100 should also be provided with a controller for controlling the starting and stopping and/or forward and reverse rotation of the plurality of transport mechanisms so as to drive the component to be conveyed in a set direction of the resultant force. For example, the direction of the resultant force can be along a longitudinal or transverse direction of the bearing portion of the conveyor. Under this arrangement, the conveyor of this conception eliminates torque coupling to various mechanical structures. Being provided with the omni-directional transport assembly and equipped with a corresponding control system, the conveyor realizes omni-directional transport of a component to be replaced with a relatively simple mechanical structure.

Herein, as a specific implementation form of the omni-directional transport assembly, in this embodiment, a Mecanum wheel with a relatively mature and stable structure is used as the transport mechanism. This conception will be focused on the application of the Mecanum wheel in the transportation of spare parts and its specific arrangement on the conveyor.

Specifically, with continued reference to Figs. 1-3, it can be found that the conveyor in the figures employs four Mecanum wheels 111a, 111b, 111c, and 111d, and the four Mecanum wheels 111a, 111b, 111c, and 111d are arranged close to four corners of the rectangular bearing portion 120, respectively. This arrangement mode ensures that the component to be conveyed can make contact with and be driven by the Mecanum wheels during the whole transfer process. For example, assuming that the component to be conveyed is transferred out of the conveyor in the negative direction of the Y-axis, the component to be conveyed will gradually come out of contact with the Mecanum wheels 111a and 111b during the driving process, and only rely on the Mecanum wheels 111c and 111d arranged in the lower corners to realize the subsequent driving. The component to be conveyed will maintain contact with the Mecanum wheels 111c and 111d until it leaves the conveyor.

According to the preceding embodiment, this design idea is mainly to ensure that the component to be conveyed can be driven by at least some of the Mecanum wheels during the whole transfer process. Therefore, it is not limited to setting the Mecanum wheels at the corners of the bearing portion. For example, optionally, the Mecanum wheels can be arranged close to edges of the bearing portion, respectively.

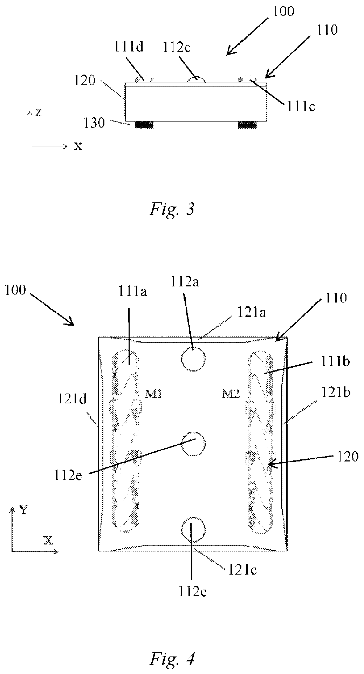

Further, the preceding embodiments need not be limited to the number of the Mecanum wheels. It should be understood that more Mecanum wheels will lead to a smoother transfer process, while fewer Mecanum wheels will lead to better cost-effectiveness. Therefore, the number of the Mecanum wheels can be adjusted according to actual needs, and the arrangement form can be adjusted according to the number. For example, as shown in Fig. 4, when the omni-directional transport assembly comprises at least two Mecanum wheels 111a and 111b, the two Mecanum wheels 111a and 111b can be arranged transversely close to the edges of the bearing portion, respectively. Certainly, in an embodiment not shown, the two Mecanum wheels can also be arranged longitudinally close to the edges of the bearing portion, respectively.

In addition, as a further improvement, in some states during the transfer process, the component to be conveyed can only make contact with and be driven by some of the Mecanum wheels. In order to provide more stable support for the component to be conveyed in this case, the omni-directional transport assembly may further comprise a plurality of universal wheels 112a, 112b, 112c, 112d and 112e, wherein the universal wheels 112a, 112b, 112c and 112d are arranged close to the edges of the bearing portion 120, respectively, while the universal wheel 112e is arranged close to the center of the bearing portion 120 to provide support for the component to be conveyed and act as a slave. As a more specific implementation form, the universal wheels arranged close to the edges of the bearing portion are each located between two adjacent Mecanum wheels. For example, the universal wheel 112a is located between the Mecanum wheels 111a and 111b. In this case, the component to be conveyed can be supported at multiple points almost in the whole conveying process, thus ensuring the stability of conveying.

In addition, although the foregoing embodiments have been described using the Mecanum wheel as the transport mechanism, in fact, other driving members can also be used as the transport mechanism as long as they fall into the scope defined by the appended claims. For example, as another example, the transport mechanism can also be an omni-directional steering wheel with a similar implementation mode, so it will not be described in detail herein.

In order to further optimize the conveying process, other structures on the conveyor have also been modified, which will be explained one by one below.

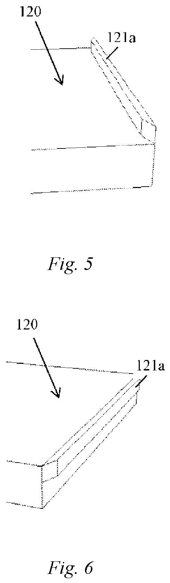

Referring to Figs. 1-6, in one embodiment, the bearing portion of the conveyor further comprises edge stoppers 121a, 121b, 121c, and 121d disposed along the edges of the bearing portion 120. The edge stoppers each have a stop position and a passage position, and can be switched between the two positions. As shown in Figs. 5 and 6, taking the edge stopper 121a as an example, when in the stop position, the edge stopper 121a is configured to prevent the component to be conveyed from passing therethrough; and when in the passage position, the edge stopper 121a is configured to allow the component to be conveyed to pass therethrough. This arrangement is more conducive to the positioning and transfer of the component to be conveyed. For example, when a component to be conveyed is transferred out from a conveyor, in order to ensure that the component can be transferred out in a desired direction, on the one hand, the corresponding direction of the resultant force is formed by controlling the Mecanum wheels; and on the other hand, it is also feasible to adjust the stoppers in other non-passage directions to their stop positions and adjust the stopper in the desired direction to its passage position, so as to assist in correcting the deviation of driving forces through the respective stopping and guiding effects of the stoppers. In this way, the transfer accuracy and reliability of the conveyor can be further improved.

As a specific implementation, the edge stoppers 121a, 121b, 121c and 121d can be pivoted with the edges of the bearing portion 120, respectively; in this arrangement, when in the stop position, the edge stopper is pivoted to be higher than the bearing portion; and when in the passage position, the edge stopper is pivoted to be lower than the bearing portion.

Optionally, the conveyor further comprises a moving portion 130 for driving the bearing portion 120 carrying the component to be conveyed to move between desired target positions.

In addition, although the conveyor of this conception has a variety of desired application scenarios, one of the application scenarios, namely using the conveyor for transporting batteries to be replaced of electric vehicles, is highlighted herein. In this case, considering the extremely limited space in places such as battery swap stations, the structure of the bearing portion of the conveyor can be further optimized to have a size matching the size of the battery to be replaced, such that all battery swap functions can be achieved in as small a size as possible.

Subsequently, the working principle of the conveyor in the electric vehicle battery swap process will be described by way of examples with reference to Figs. 1, 7 and 8.

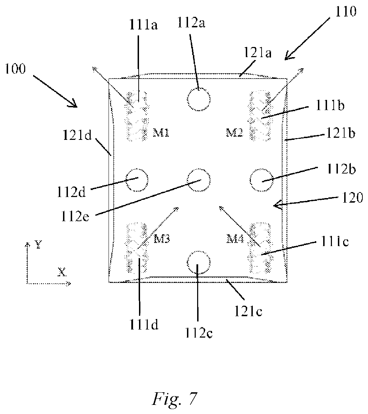

Fig. 7 is a schematic diagram of transport of a conveyor in the positive direction of the Y-axis. Arrow marks on the Mecanum wheels in the figure are used to indicate force application directions. In this case, the controller controls the four Mecanum wheels 111a, 111b, 111c and 111d to rotate forward at the same time, such that the Mecanum wheel 111a generates a force between the positive direction of the Y-axis and the negative direction of the X-axis; the Mecanum wheel 111b generates a force between the positive direction of the Y-axis and the positive direction of the X-axis; the Mecanum wheel 111c generates a force between the positive direction of the Y-axis and the negative direction of the X-axis; and the Mecanum wheel 111d generates a force between the positive direction of the Y-axis and the positive direction of the X-axis. The direction of the resultant force in this case is in the positive direction of the Y-axis. At the same time, the edge stopper 121a is adjusted to the passage position, while the other three edge stoppers 121b, 121c, and 121d are maintained in the stop position. In this case, the battery to be replaced travels along the guide surrounded by the plurality of edge stoppers under the drive of the Mecanum wheels, and is transferred to a designated position along the positive direction of the Y-axis.

By the same token, by adjusting the turning direction of the Mecanum wheels and the opening and closing of the edge stoppers, the conveyor's function of transport in the negative direction of the Y-axis can be realized, and therefore, it will not be described further herein.

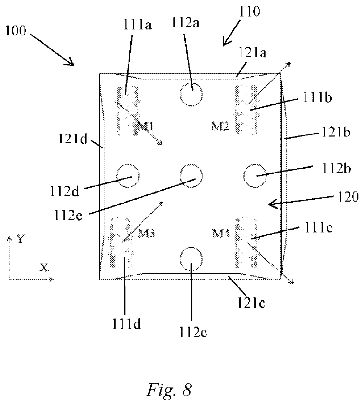

Fig. 8 is a schematic diagram of transport of a conveyor in the positive direction of the X-axis. Arrow marks on the Mecanum wheels in the figure are used to indicate force application directions. In this case, the controller controls the Mecanum wheels 111b and 111d to rotate forward and simultaneously controls the Mecanum wheels 111a and 111c to rotate reversely, such that the Mecanum wheel 111a generates a force between the negative direction of the Y-axis and the positive direction of the X-axis; the Mecanum wheel 111b generates a force between the positive direction of the Y-axis and the positive direction of the X-axis; the Mecanum wheel 111c generates a force between the negative direction of the Y-axis and the positive direction of the X-axis; and the Mecanum wheel 111d generates a force between the positive direction of the Y-axis and the positive direction of the X-axis. The direction of resultant force in this case is in the positive direction of the X-axis. At the same time, the edge stopper 121b is adjusted to the passage position, while the other three edge stoppers 121a, 121c, and 121d are maintained in the stop position. In this case, the battery to be replaced travels along the guide surrounded by the plurality of edge stoppers under the drive of the Mecanum wheels, and is transferred to a designated position along the positive direction of the X-axis.

By the same token, by adjusting the turning direction of the Mecanum wheels and the opening and closing of the edge stoppers, the conveyor's function of transport in the negative direction of the X-axis can be realized, and therefore, it will not be described further herein.

Referring to Fig. 1, the transport process of clockwise rotation of the conveyor will be described. In this case, the controller controls the Mecanum wheels 111a and 111d to rotate forward and simultaneously controls the Mecanum wheels 111b and 111c to rotate reversely, such that the Mecanum wheel 111a generates a force between the positive direction of the Y-axis and the negative direction of the X-axis; the Mecanum wheel 111b generates a force between the negative direction of the Y-axis and the negative direction of the X-axis; the Mecanum wheel 111c generates a force between the negative direction of the Y-axis and the positive direction of the X-axis; and the Mecanum wheel 111d generates a force between the positive direction of the Y-axis and the positive direction of the X-axis. In this case, a resultant force formed by the Mecanum wheels 111a and 111d is in a positive direction along the Y-axis, while a resultant force formed by the Mecanum wheels 111b and 111c is in a negative direction along the Y-axis. The two together form a torque rotating clockwise, enabling the battery to be conveyed thereon to rotate clockwise. At the same time, the edge stoppers 121a, 121b, 121c, and 121d are all adjusted to the passage positions so that the rotation process of the battery is not hindered.

By the same token, by adjusting the turning direction of the Mecanum wheels and the opening and closing of the edge stoppers, the conveyor's function of transport in the counterclockwise rotating direction can be realized, and therefore, it will not be described further herein.

The above examples mainly illustrate the conveyor. Although only some of the embodiments of the invention have been described, those skilled in the art should understand that the invention can be implemented in many other forms without departing from its substance and scope. Therefore, the examples and embodiments shown should be considered as illustrative and not restrictive, and various modifications and replacements may be covered by the invention without departing from the scope of the invention as defined in the appended claims.

## Claims

1. A conveyor (100) comprising: a bearing portion (120) for bearing a component to be conveyed; a moving portion (130) for driving the bearing portion (120) to move, **characterized in that** an omni-directional transport assembly (110) comprising a plurality of transport mechanisms arranged on the bearing portion (120), wherein the transport mechanisms are used for providing driving forces in set directions, respectively, and the component to be conveyed moves in the direction of a resultant force of the driving forces of the plurality of transport mechanisms relative to the bearing portion (120); and a controller for controlling the starting and stopping and/or forward and reverse rotation of the plurality of transport mechanisms so as to drive the component to be conveyed in a set direction of the resultant force, and **in that** the omni-directional transport assembly (110) further comprises a plurality of universal wheels (112a, 112b, 112c, 112d) which are arranged close to the center and/or the edges of the bearing portion (120), respectively.

2. The conveyor (100) according to claim 1, **characterized in that** the transport mechanisms are Mecanum wheels (111a, 111b, 111c, 111d).

3. The conveyor (100) according to claim 2, **characterized in that** the Mecanum wheels (111a, 111b, 111c, 111d) are arranged close to edges of the bearing portion (120), respectively.

4. The conveyor (100) according to claim 3, **characterized in that** the bearing portion (120) is constructed into a rectangular shape, and the omni-directional transport assembly (110) comprises at least two Mecanum wheels (111a, 111b, 111c, 111d); wherein the two Mecanum wheels (111a, 111b, 111c, 111d) are arranged longitudinally or transversely close to the edges of the bearing portion (120), respectively.

5. The conveyor (100) according to claim 3, **characterized in that** the bearing portion (120) is constructed into a rectangular shape, and the omni-directional transport assembly (110) comprises at least four Mecanum wheels (111a, 111b, 111c, 111d); wherein the Mecanum wheels (111a, 111b, 111c, 111d) are arranged close to four corners of the bearing portion (120), respectively.

6. The conveyor (100) according to claim 1, **characterized in that** the universal wheels (112a, 112b, 112c, 112d) arranged close to the edges of the bearing portion (120) are each positioned between two adjacent Mecanum wheels (111a, 111b, 111c, 111d).

7. The conveyor (100) according to any one of claims 1 to 5, **characterized by** further comprising edge stoppers (121a, 121b, 121c, 121d) arranged along the edges of the bearing portion (120), the edge stoppers (121a, 121b, 121c, 121d) each having a stop position in which the edge stopper is configured to prevent the component to be conveyed from passing therethrough and a passage position in which the edge stopper is configured to allow the component to be conveyed to pass therethrough.

8. The conveyor (100) according to claim 7, **characterized in that** the edge stoppers (121a, 121b, 121c, 121d) are pivoted with the edges of the bearing portion (120); when in the stop position, the edge stopper is pivoted to be higher than the bearing portion (120); and when in the passage position, the edge stopper is pivoted to be lower than the bearing portion (120).

9. The conveyor (100) according to any one of claims 1 to 5, **characterized in that** the direction of the resultant force is along a longitudinal or transverse direction of the bearing portion (120) of the conveyor (100).

10. The conveyor (100) according to claim 1, **characterized in that** the transport mechanism is an omni-directional steering wheel.

11. A conveyor (100) according to any one of claims 1 to 10, **characterized in that** the conveyor (100) is used for transporting batteries to be replaced of electric vehicles.

12. The conveyor (100) according to claim 11, **characterized in that** the bearing portion (120) has a size matching the size of the batteries to be replaced.

## Patentansprüche

1. Fördereinrichtung (100), die Folgendes umfasst: einen Trägerabschnitt (120) zum Tragen einer zu befördernden Komponente; einen sich bewegenden Abschnitt (130) zum Antreiben des Trägerabschnitts (120), derart, dass er sich bewegt, **dadurch gekennzeichnet, dass** eine omnidirektionale Transportanordnung (110) mehrere Transportmechanismen, die auf dem Trägerabschnitt (120) angeordnet sind, wobei die Transportmechanismen jeweils zum Bereitstellen von Antriebskräften in eingestellten Richtungen verwendet werden und die zu befördernde Komponente sich in der Richtung einer resultierenden Kraft der Antriebskräfte der mehreren Transportmechanismen relativ zum Trägerabschnitt (120) bewegt; und eine Steuereinheit zum Steuern des Beginnens und Anhaltens und/oder einer Drehung vorwärts und rückwärts der mehreren Transportmechanismen, um die zu befördernde Komponente in einer eingestellten Richtung der resultierenden Kraft anzutreiben, umfasst und dass die omnidirektionale Transportanordnung (110) ferner mehrere allgemeine Räder (112a, 112b, 112c, 112d) umfasst, die jeweils nahe bei der Mitte und/oder den Rändern des Trägerabschnitts (120) angeordnet sind.

2. Fördereinrichtung (100) nach Anspruch 1, **dadurch gekennzeichnet, dass** die Transportmechanismen Mecanum-Räder (111a, 111b, 111c, 111d) sind.

3. Fördereinrichtung (100) nach Anspruch 2, **dadurch gekennzeichnet, dass** die Mecanum-Räder (111a, 111b, 111c, 111d) jeweils nahe bei den Rändern des Trägerabschnitts (120) angeordnet sind.

4. Fördereinrichtung (100) nach Anspruch 3, **dadurch gekennzeichnet, dass** der Trägerabschnitt (120) in einer rechtwinkligen Form konstruiert ist und die omnidirektionale Transportanordnung (110) mindestens zwei Mecanum-Räder (111a, 111b, 111c, 111d) umfasst; wobei die zwei Mecanum-Räder (111a, 111b, 111c, 111d) jeweils in Längsrichtung oder in Querrichtung nahe bei den Rändern des Trägerabschnitts (120) angeordnet sind.

5. Fördereinrichtung (100) nach Anspruch 3, **dadurch gekennzeichnet, dass** der Trägerabschnitt (120) in einer rechtwinkligen Form konstruiert ist und die omnidirektionale Transportanordnung (110) mindestens vier Mecanum-Räder (111a, 111b, 111c, 111d) umfasst; wobei die Mecanum-Räder (111a, 111b, 111c, 111d) jeweils in der Nähe von vier Ecken des Trägerabschnitts (120) angeordnet sind.

6. Fördereinrichtung (100) nach Anspruch 1, **dadurch gekennzeichnet, dass** die allgemeinen Räder (112a, 112b, 112c, 112d), die in der Nähe der Ränder des Trägerabschnitts (120) angeordnet sind, jeweils zwischen zwei benachbarten Mecanum-Rädern (111a, 111b, 111c, 111d) angeordnet sind.

7. Fördereinrichtung (100) nach einem der Ansprüche 1 bis 5, **dadurch gekennzeichnet, dass** sie ferner Randanschlagelemente (121a, 121b, 121c, 121d) umfasst, die entlang der Ränder des Trägerabschnitts (120) angeordnet sind, wobei die Randanschlagelemente (121a, 121b, 121c, 121d) konfiguriert sind, in einer jeweiligen Anhalteposition zu verhindern, dass die zu befördernde Komponente dort hindurchtritt, und in einer Durchlassposition ermöglichen, dass die zu befördernde Komponente dort hindurchtritt.

8. Fördereinrichtung (100) nach Anspruch 7, **dadurch gekennzeichnet, dass** die Randanschlagelemente (121a, 121b, 121c, 121d) mit den Rändern des Trägerabschnitts (120) gedreht werden; dann, wenn es sich in der Anhalteposition befindet, das Randanschlagelement derart gedreht ist, dass es höher als der Trägerabschnitt (120) ist; und dann, wenn es sich in der Durchlassposition befindet, das Randanschlagelement derart gedreht ist, dass es niedriger als der Trägerabschnitt (120) ist.

9. Fördereinrichtung (100) nach einem der Ansprüche 1 bis 5, **dadurch gekennzeichnet, dass** die Richtung der resultierenden Kraft in einer Längsrichtung oder einer Querrichtung des Trägerabschnitts (120) der Fördereinrichtung (100) verläuft.

10. Fördereinrichtung (100) nach Anspruch 1, **dadurch gekennzeichnet, dass** der Transportmechanismus ein omnidirektionales Lenkrad ist.

11. Fördereinrichtung (100) nach einem der Ansprüche 1 bis 10, **dadurch gekennzeichnet, dass** die Fördereinrichtung (100) zum Transportieren von auszutauschenden Batterien von Elektrofahrzeugen verwendet wird.

12. Fördereinrichtung (100) nach Anspruch 11, **dadurch gekennzeichnet, dass** der Trägerabschnitt (120) eine Größe aufweist, die auf die Größe der auszutauschenden Batterien abgestimmt ist.

## Revendications

1. Transporteur (100) comprenant : une partie de support (120) pour supporter un élément à transporter ; une partie de déplacement (130) pour entraîner la partie de support (120) pour la déplacer, **caractérisé en ce qu'**un ensemble de transport omnidirectionnel (110) comporte une pluralité de mécanismes de transport disposés sur la partie de support (120), ces mécanismes de transport étant utilisés pour fournir des forces d'entraînement dans des directions définies, respectivement, et l'élément à transporter se déplaçant dans la direction d'une force résultante des forces d'entraînement de la pluralité de mécanismes de transport relativement à la partie de support (120) ; et un dispositif de commande pour commander le démarrage et l'arrêt et/ou la rotation en avant et en arrière de la pluralité de mécanismes de transport afin d'entraîner l'élément à transporter dans une direction définie de la force résultante, et **caractérisé en ce que** l'ensemble de transport omnidirectionnel (110) comporte en outre une pluralité de roues universelles (112a, 112b, 112c, 112d) qui sont disposées à proximité du centre et/ou des bords de la partie de support (120), respectivement.

2. Transporteur (100) selon la revendication 1, **caractérisé en ce que** les mécanismes de transport sont des roues Mecanum (111a, 111b, 111c, 111d).

3. Transporteur (100) selon la revendication 2, **caractérisé en ce que** les roues Mecanum (111a, 111b, 111c, 111d) sont disposées à proximité des bords de la partie de support (120), respectivement.

4. Transporteur (100) selon la revendication 3, **caractérisé en ce que** la partie de support (120) est construite en une forme rectangulaire, et **en ce que** l'ensemble de transport omnidirectionnel (110) comporte au moins deux roues Mecanum (111a, 111b, 111c, 111d) ; ces deux roues Mecanum (111a, 111b, 111c, 111d) étant disposées longitudinalement ou transversalement à proximité des bords de la partie de support (120), respectivement.

5. Transporteur (100) selon la revendication 3, **caractérisé en ce que** la partie de support (120) est construite en une forme rectangulaire, et **en ce que** l'ensemble de transport omnidirectionnel (110) comporte au moins quatre roues Mecanum (111a, 111b, 111c, 111d) ; ces roues Mecanum (111a, 111b, 111c, 111d) étant disposées à proximité des bords de quatre coins de la partie de support (120), respectivement.

6. Transporteur (100) selon la revendication 1, **caractérisé en ce que** les roues Mecanum (111a, 111b, 111c, 111d) disposées à proximité des bords de la partie de support (120) sont chacune positionnées entre deux roues Mecanum (111a, 111b, 111c, 111d) adjacentes.

7. Transporteur (100) selon l'une quelconque des revendications 1 à 5, **caractérisé en ce qu'**il comporte en outre des butées de bord (121a, 121b, 121c, 121d) disposées le long des bords de la partie de support (120), ces butées de bord (121a, 121b, 121c, 121d) ayant chacune une position d'arrêt dans laquelle la butée de bord est configurée de façon à empêcher l'élément à transporter de passer à travers et une position de passage dans laquelle la butée de bord est configurée de façon à permettre à l'élément à transporter de passer à travers.

8. Transporteur (100) selon la revendication 7, **caractérisé en ce que** les butées de bord (121a, 121b, 121c, 121d) pivotent au moyen des bords de la partie de support (120) ; lorsqu'elle est dans la position d'arrêt, la butée de bord a pivoté de façon à être plus haute que la partie de support (120) ; et, lorsqu'elle est dans la position de passage, la butée de bord a pivoté de façon à être plus basse que la partie de support (120).

9. Transporteur (100) selon l'une quelconque des revendications 1 à 5, **caractérisé en ce que** la direction de la force résultante est le long d'une direction longitudinale ou transversale de la partie de support (120) du transporteur (100).

10. Transporteur (100) selon la revendication 1, **caractérisé en ce que** le mécanisme de transport est une roue directrice omnidirectionnelle.

11. Transporteur (100) selon l'une quelconque des revendications 1 à 10, **caractérisé en ce que** ce transporteur (100) est utilisé pour transporter des batteries à remplacer pour des véhicules électriques.

12. Transporteur (100) selon la revendication 11, **caractérisé en ce que** la partie de support (120) a une taille correspondant à la taille des batteries à remplacer.
